# EUROPÄISCHE PATENTSCHRIFT

(11) **EP 0 485 339 B1**
(45) Veröffentlichungstag und Bekanntmachung des Hinweises auf die Patenterteilung: **13.07.1994**
(21) Anmeldenummer: 91810849.9
(22) Anmeldetag: 04.11.1991
(51) Int. Cl.: B24B 53/06

(54) **Verfahren und Vorrichtung zum Profilieren von Schleifscheiben**
Process and apparatus for shaping grinding wheels
Procédé et appareil pour profiler des meules

(30) Priorität: 07.11.1990 CH 3539/90
(43) Veröffentlichungstag der Anmeldung: 13.05.1992
(73) Patentinhaber: REISHAUER AG., CH-8304 Wallisellen (CH)
(72) Erfinder: Feisel, Armin, CH-8200 Schaffhausen (CH)
(74) Vertreter: Münch, Otto

(56) Entgegenhaltungen:
- EP-A- 0 255 267
- EP-A- 0 321 971
- CH-A- 647 177
- DE-A- 3 134 147
- GB-A- 2 107 229
- US-A- 2 720 062

## Beschreibung

Beim Schleifen von profilierten Werkstücken auf Schleifmaschinen, z.B. Rund-, Flach-, Zahnrad- und Gewinde-Schleifmaschinen, mit herkömmlichen Schleifscheiben besteht die Aufgabe, die Schleifscheibe wirtschaftlich und mit der erforderlichen Genauigkeit zu profilieren und damit bei Schleifscheibenverschleiss und Abstumpfung diese wieder schnittfähig und profiltreu herzurichten.

Dazu stehen heute verschiedene Verfahren zur Verfügung. Die erste Möglichkeit ist, mit einem Einzeldiamanten oder mit einer diamantbesetzten Profilrolle mittels schablonen- oder NC-gesteuerter Abrichtvorrichtung dem Profil entlang zu fahren und so die Schleifscheibe zu schärfen und zu profilieren. Dieses Verfahren ist zwar sehr flexibel in der Formgebung und eignet sich daher auch für die Kleinserienfertigung, jedoch sind die Abrichtzeiten lang, da das Abrichtwerkzeug jeweils nur in einem quasi punktförmigen Kontakt mit der Schleifscheibe steht und deshalb mit einem verhältnismässig kleinen Vorschub dem Profil entlang geführt werden muss.

Die zweite Möglichkeit besteht darin, eine diamantbesetzte Profilrolle zu verwenden, die das ganze Profil enthält und auf der ganzen Schleifscheibenbreite gleichzeitig profiliert. Dieses Verfahren ermöglicht zwar kurze Abrichtzeiten, da der Eingriff mit der Schleifscheibe linienförmig erfolgt. Es kommt jedoch praktisch nur für die Gross-Serienproduktion in Frage, da die Profilrolle sehr teuer ist, lange Beschaffungszeiten erfordert, und weil Profiländerungen nachträglich nicht mehr möglich sind.

Ein drittes Verfahren, das Einrollen des Profils mit Pressrollen (Stahlrollen) beiniedriger Umfangsgeschwindigkeit hat heute nur noch geringe Bedeutung und wird nur noch für die,Einzelfertigung von speziellen Profilen angewandt.

Ein Abrichtverfahren und eine Abrichtvorrichtung gemäss Oberbegriff der Ansprüche 1 und 2 ist in der US-PS 2 720 062 beschrieben. Bei diesem Vorschlag ist die Schleifscheibe alternativ zum Werkstück und zu einer Abrichtrolle zustellbar, welche sie auf die erforderliche Form abrichtet. Gegen die Abrichtrolle ist hinwiederum eine Konditionierrolle zustellbar, welche die Abrichtrolle abrichtet und das gleiche Profil hat wie die Schleifscheibe. Dieser Vorschlag vereinigt sämtliche Nachteile der vorerwähnten Abrichtverfahren auf sich und hat deshalb keinen Eingang in die Praxis gefunden.

Die Aufgabe der vorliegenden Erfindung besteht darin, ein Abrichtverfahren zu schaffen, welches eine hohe Flexibilität bei kurzen Abrichtzeiten ermöglicht. Diese Aufgabe wird durch die kennzeichnenden Merkmale der Ansprüche 1 und 2 gelöst.

Nachfolgend werden Ausführungsbeispiele der Erfindung anhand der Zeichnung erläutert. Darin zeigt:
- Fig. 1: eine schematische Darstellung des Grundprinzips der Erfindung,
- Fig. 2: ein Detail der Ausführungsform nach Fig. 1 in vergrössertem Massstab,
- Fig. 3: eine schematische Darstellung einer zweiten Ausführungsform der Erfindung,
- Fig. 4: ein Detail der Ausführungsform nach Fig. 3 in vergrössertem Massstab,
- Fig. 5: eine schematische Darstellung einer dritten Ausführungsform der Erfindung,
- Fig. 6: einen Axialschnitt durch die Abrichtrolle nach Fig. 5 beim Konditionieren,
- Fig. 7: einen Teil eines Axialschnittes durch die Konditionierscheibe nach Fig. 5,
- Fig. 8: eine Variante der Ausführungsform nach Fig. 5 beim Abrichten der Schleifschnecke, und
- Fig. 9: eine schematische Darstellung einer vierten Ausführungsform der Erfindung.

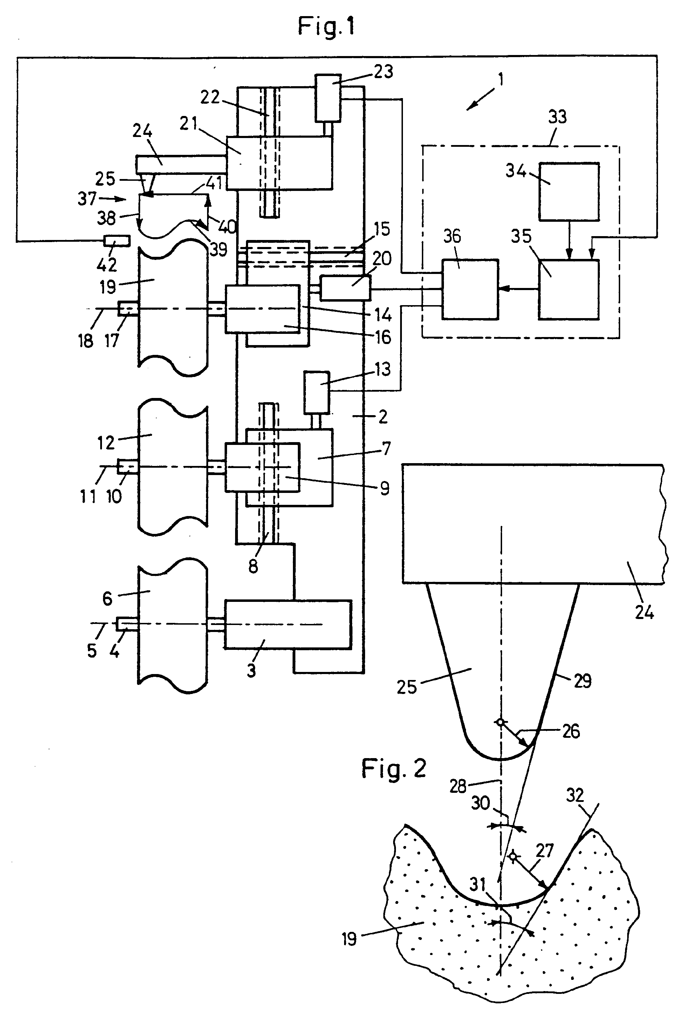

In Fig. 1 ist das Grundprinzip der Erfindung anhand eines einfachen Beispiels dargestellt. Die Vorrichtung 1 hat einen Rahmen 2. Auf dem Rahmen 2 ist ein Antriebsmotor 3 einer Werkstückspindel 4 befestigt, die um eine Werkstückachse 5 dreht und ein Werkstück 6 trägt. Auf dem Rahmen 2 ist ein Schlitten 7 radial zur Achse 5 in einer Führung 8 verschiebbar gelagert. Der Schlitten 7 trägt einen Schleifspindelmotor 9 mit einer Schleifspindel 10 und einer Drehachse 11. Auf der Schleifspindel 10 ist eine Profil-Schleifscheibe 12 montiert. Diese besteht z.B. aus kunstharz- oder keramikgebundenem Siliziumkarbid oder Korund. Der Schlitten 7 ist durch einen Servormotor 13 radial zu den parallelen Achsen 5, 11 verschiebbar. Auf dem Rahmen 2 ist ein weiterer Schlitten 14 in einer Führung 15 parallel zu den Achsen 5, 11 verschiebbar. Er trägt einen Motor 16, der eine Abrichtspindel 17 treibt. Die Achse 18 der Spindel 17 ist parallel zu den Achsen 5, 11. Auf der Spindel 17 ist eine Abrichtrolle 19 montiert, die beim Abrichten die Schleifscheibe 12 linienförmig berührt und Körner grösserer Härte als die Härte der Schleifkörner der Schleifscheibe 12 enthält. Die Abrichtrolle 19 kann z.B. einen Mantel aus keramisch gebundenem kubischem Bornitrid (CBN) enthalten. Der Schlitten 14 ist mittels eines weiteren Servomotors 20 verschiebbar. Ein dritter Schlitten 21 ist am Rahmen 2 senkrecht zu den Achsen 5, 11, 18 in einer weiteren, vorzugsweise zur Führung 8 parallelen Führung 22 verschiebbar gelagert und durch einen weiteren Servomotor 23 verschiebbar. Er trägt einen Arm 24 mit einem Konditionierdiamanten 25.

Die Schneidgeometrie des Konditionierdiamanten 25 ist in Fig. 2 vergrössert dargestellt, zusammen mit einem Teil des Profils der Abrichtrolle 19. Der Diamant 25 ist in der Draufsicht dreieckförmig mit einer abgerundeten, der Abrichtrolle 19 zugewandten Spitze mit einem Krümmungsradius 26, der kleiner aber nur wenig kleiner ist als der kleinste Krümmungsradius 27 des Profils der Abrichtrolle 19. Der Diamant 25 ist z.B. symmetrisch zu einer zu den Achsen 5, 11, 18 senkrechten Achse 28. Die Seitenflanken 29 des Diamanten 25 schliessen mit der Achse 28 einen Winkel 30 ein, der kleiner ist als der kleinste Winkel 31 der Tangente 32 des Abrichtrollenprofils mit der Achse 28. Beim Konditionieren berührt also der Diamant 25 die Abrichtrolle 19 quasi punktförmig.

Die drei Servomotoren 13, 20, 23 werden durch eine programmierbare Steuereinheit 33 gesteuert. Diese hat eine Eingabeeinheit 34, z.B. eine Tastatur, zur Eingabe der Programmdaten, einen Speicher 35 zur Speicherung der Programmdaten sowie eine Verstärkereinheit 36. Mittels der Verstärkereinheit wird der Vorschubhub des Servomotors 13 zum Schleifen des Werkstücks 6 und zum Abrichten der Schleifscheibe 12 an der Abrichtrolle 19 entsprechend den eingegebenen Daten gesteuert. Zum Abrichten wird die Schleifscheibe 12 z.B. während des Werkstückwechsels mittels des Motors 13 gegen die Abrichtrolle 19 gedrückt. Die Spindeln 10, 17 drehen so, dass unterschiedlich grosse Umfangsgeschwindigkeiten an der Schleifscheibe 12 und an der Abrichtrolle 19 entstehen. Dadurch entsteht ein Abtrag auf der Schleifscheibe 12, wodurch das Profil der Abrichtrolle 19 auf die Schleifscheibe 12 abgebildet wird. Wegen des linienförmigen Kontaktes ist dies ein sehr schneller Vorgang, da nur eine einzige Zustellbewegung stattfindet.

Obwohl die Abrichtrolle 19 aus einem härterem Werkstoff besteht als die Schleifscheibe 12, werden beim Abrichten auch aus der Abrichtrolle 19 Partikel herausgelöst und abgetragen. Dadurch würde, auf einen längeren Zeitraum betrachtet, die Profiltreue verloren gehen. Um dies zu verhindern, wird während des nachfolgenden Schleifens, das heisst wenn die Schleifscheibe 12 mit dem Werkstück 6 in Kontakt steht, die Abrichtrolle 19 mittels des Diamanten 25 konditioniert, das heisst abgerichtet und geschärft. Dies erfolgt durch eine programmgesteuerte Relativbewegung 37 zwischen Diamant 25 und Abrichtrolle 19 durch synchronisierte Ansteuerung der Servomotoren 20, 23. Die Relativbewegung 37 beginnt mit einer radialen Zustellung 38 mittels des Motors 23. Hierauf durchfährt der Diamant 25 relativ zur Abrichtrolle 19 eine Bahn 39 entsprechend dem zu erzeugenden Profil mittels beider Motoren 20, 23 gesteuert durch die Verstärkereinheit 36 entsprechend den im Speicher 35 gespeicherten Programmdaten. Schliesslich folgt ein Rückzug 40 sowie eine axiale Rückstellung 41 mittels des Motors 20. Um die erforderliche radiale Zustellung 38 zu bestimmen, kann noch ein Durchmesser-messgerät 42 an einer Stelle des Umfangs der Abrichtrolle 19 vorgesehen sein. Der Motor 16 kann auch fest mit dem Rahmen 2 verbunden und dafür der Schlitten 21 als Kreuzschlitten ausgebildet sein.

Bei den nachfolgend beschriebenen Ausführungsbeispielen werden jeweils analoge Teile mit gleichen Bezugszeichen versehen, so dass sich eine detaillierte Erläuterung dieser Teile erübrigt.

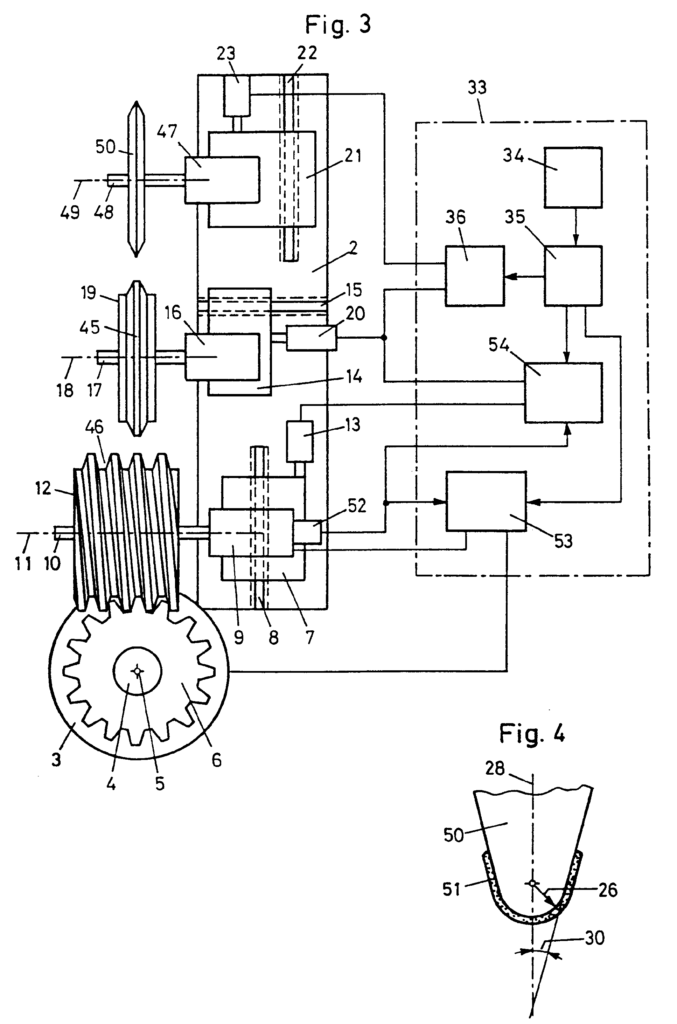

Bei der Ausführungsform nach Fig. 3 ist das Werkstück 6 ein Zahnrad, das mit der hier schneckenförmigen, zylindrischen Schleifscheibe 12 im kontinuierlichen Wälzverfahren bearbeitet wird. Die Achsen 5, 11 stehen entweder senkrecht oder windschief zueinander. Die Abrichtrolle 19 hat einen rotationssymmetrischen Rand 45 mit einem Profil entsprechend den Nuten 46 der Schleifschnecke 12. Bei dieser Ausführungsform trägt der Schlitten 21 einen weiteren Motor 47 mit einer Konditionierspindel 48, die um eine zur Achse 18 parallele Achse 49 dreht. Auf der Spindel 48 ist eine rotationssymmetrische Stahlscheibe 50 aufgespannt, deren äusserster, z.B. torusförmiger Rand eine Beschichtung 51 mit Diamantkörnern hat. Im Axialschnitt (Fig. 4) müssen die Krümmungsradien 26 und Flankenwinkel 30 dieses Randes wiederum die im Zusammenhang mit Fig. 2 erläuterten Bedingungen erfüllen. Wie der Diamant 25 nach Fig. 1 hat die Konditionierscheibe 50 ein werkstückneutrales Profil. Es können auch andere aus Geraden und Kurven zusammengesetzte, werkstückneutrale Profile als das in Fig. 4 gezeigte verwendet werden. Auf diesem werkstückneutralen Profil beruht die Flexibilität des erfindungsgemässen Verfahrens, da mit der gleichen Konditionierscheibe 50 verschiedene Abrichtrollenprofile erzeugt werden können.

Die Schleifspindel 10 ist mit einem Winkelgeber 52 verbunden. Dieser steuert über einen Servoverstärker 53 den hier als Servomotor ausgebildeten Motor 3, damit die Spindeln 4, 10 genau synchron laufen mit einem festen, ganzzahligen Drehzahlverhältnis entsprechend dem Verhältnis der Gangzahl der Schleifschnecke 12 zur Zähnezahl des Zahnrades 6. Ausserdem hat die Steuereinheit 33 einen zweiten Servoverstärker 54, der die Verschiebung des Schlittens 14 synchron mit dem Drehwinkel der Schleifspindel 10 beim Abrichten sicherstellt, analog zum Gewindeschleifen. Beim Konditionieren hingegen ist der Servomotor 20 in gleicher Weise durch die Verstärkereinheit 36 mit dem Servomotor 23 synchronisiert, wie dies im Zusammenhang mit Fig. 1 beschrieben wurde.

Das Abrichtverfahren und die Vorrichtung nach Fig. 1 und 3 haben gegenüber den eingangs erläuterten Abrichtverfahren vor allem folgende Vorteile:
- sie ermöglichen durch den linienförmigen Kontakt zwischen Abrichtscheibe 19 und Schleifscheibe 12 kurze Abrichtzeiten.
- Zugleich wird durch das programmgesteuerte Konditionieren der Abrichtscheibe 19 mittels der sehr einfach aufgebauten und daher preiswert herstellbaren Konditionierscheibe 50 ermöglicht, dass an der Abrichtscheibe 19 auch nachträglich kleine Korrekturen angebracht werden können.
- Die gleiche Konditionierscheibe 50 kann zum Konditionieren unterschiedlicher Abrichtrollen 19 eingesetzt werden.
- Das Konditionieren erfolgt jeweils während der Bearbeitung eines Werkstücks 6, so dass keine Verlustzeiten auftreten.

Damit ist das beschriebene Abrichtverfahren sehr flexibel und kann daher auch für die Kleinserienfertigung eingesetzt werden, und es ermöglicht kurze Abrichtzeiten.

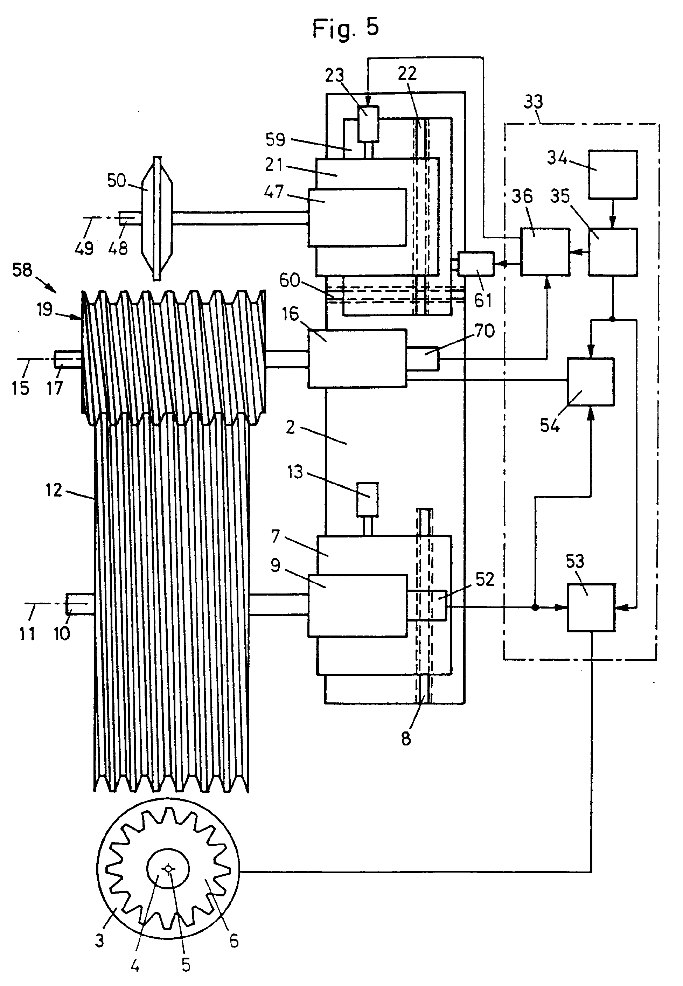

Das dritte Ausführungsbeispiel gemäss Fig. 5 bis 8 unterscheidet sich vom zweiten Ausführungsbeispiel nach Fig. 3 hauptsächlich dadurch, dass hier die Abrichtrolle 19 eine zylindrische Abrichtschnecke 58 ist, die etwas breiter ist als die Schleifschnecke 12, und dass der Schlitten 14 entfällt, dafür der Schlitten 21 nach Fig. 3 als Kreuzschlitten ausgebildet ist. Der Schlitten 21 ist mittels des Servomotors 23 senkrecht zur Achse 49 der Konditionierscheibe 50 und zusätzlich mittels eines weiteren Schlittens 59, der in einer zur Achse 15 parallelen Führung 60 verschiebbar gelagert ist, durch einen zum Servomotor 20 analogen Servomotor 61 verschiebbar.

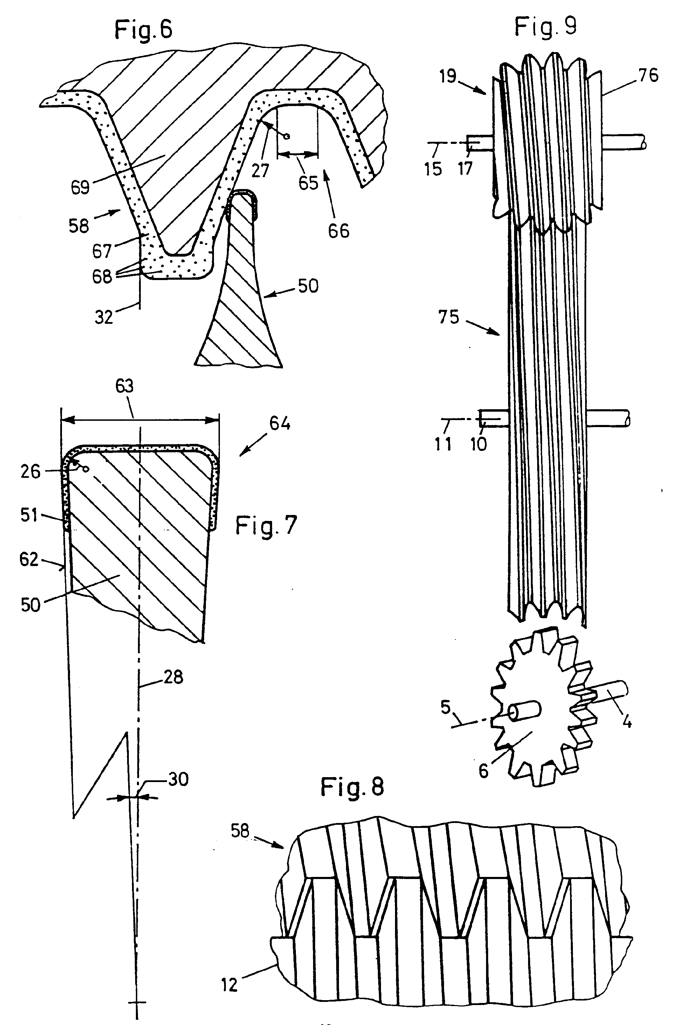

Wie beim zuvor beschriebenen Ausführungsbeispiel ist beim Konditionieren der Abrichtschnecke 58 durch die Scheibe 50 nur deren äussester Rand (Fig. 6 und 7) mit dieser im Eingriff. Weil es hier erwünscht ist,dass im Kronenbereich der Abrichtschnecke 58 eine Tangente 32 etwa radial verläuft, ist es erforderlich, dass der Winkel 30 zwischen der Flanke 62 und der Symmetrieachse 28 negativ ist, wie dies in Fig. 7 dargestellt ist. Die Breite 63 des Randes 64 der Konditionierscheibe 50 ist geringer als die Nutbreite 65 der Nuten 66 der Abrichtschnecke 58. Die Abrichtschnecke 58 hat an ihrem Aussenumfang eine Schicht 67 von z.B. keramisch gebundenem CBN auf einem Metallkörper 69.

Der Servoverstärker 53 sorgt wiederum für einen Synchronlauf des Servomotors 3 mit dem Motor 9, und die Verstärkereinheit 36 für die Synchronisierung der Servomotoren 23, 61, die hier jedoch zusätzlich mit dem Drehwinkel der Abrichtspindel 17 synchronisiert sein muss. Dazu ist mit dieser Spindel 17 ein Winkelgeber 70 gekoppelt. Der Servoverstärker 54 stellt hier den Synchronlauf des als Servomotor ausgebildeten Motors 16 mit dem Motor 9 sicher. Das Drehzahlverhältnis entspricht dem Verhältnis der Gangzahlen von Schleifschnecke 12 und Abrichtschnecke 58. Bei gleichsinniger Steigung drehen die Spindeln 10, 17 gleichsinnig, bei ungleichsinniger Steigung gegenläufig.

Wie in Fig. 8 dargestellt ist, kann die Zahnbreite der Abrichtschnecke 58 geringer sein als die Zahnlückenweite der Schleifschnecke 12. Die beiden Flanken der Zähne der Schleifschnecke 12 werden in diesem Fall nacheinander bearbeitet durch eine gesteuerte Zusatzdrehbewegung der Abrichtschnecke 58 relativ zu deren synchronen Drehbewegung mit der Schleifschnecke 12 zuerst in der einen, anschliessend in der anderen Richtung. Statt mittels einer Zusatz-Drehbewegung kann die Relativverschiebung der Zahnprofile von Schleifschnecke und Abrichtschnecke auch mittels einer Linearverschiebung erreicht werden. Dazu ist allerdings ein weiterer Schlitten erforderlich. Die Ausführungsform nach Fig. 5 hat gegenüber jener nach Fig. 3 vor allem folgende zusätzlichen Vorteile:
- Die Abrichtzeiten sind bedeutend kürzer, weil die Schleifscheibe 12 auf ihrer ganzen Breite gleichzeitig abgerichtet wird.
- Aus kinetischen Gründen muss bei der Ausführungsform nach Fig. 3 die Drehzahl der Schleifscheibe 12 während des Abrichtens um mehr als eine Grössenordnung geringer sein als die zur Bearbeitung des Zahnrades 6 übliche Drehzahl, weil sonst die erforderliche Genauigkeit der Synchronisation des Servomotors 20 mit dem Drehwinkel der Schleifspindel nicht möglich wäre. Dadurch können in Folge von Fliehkräften auftretende Formveränderungen der Schleifschnecke 12 beim anschliessenden Schleifen ein zuvor sehr genau erzeugtes Schneckenprofil wieder ungünstig beeinflussen. Die Ausführungsform nach Fig. 5 hat demgegenüber den Vorteil,dass hier das Abrichten mit der gleichen Schleifspindeldrehzahl erfolgen kann, die auch zum Schleifen verwendet wird, so dass die obige Schwierigkeit vermieden wird.

Wie in Fig. 9 dargestellt ist, ermöglicht es die Erfindung, eine globoidartige Schleifschnecke 75 mit einem nachrichtbaren Abrichtwerkzeug abzurichten, was bisher nicht für möglich gehalten wurde. Bisher bestand die einzige Möglichkeit, solche globoidartigen Schleifschnecken 75 abzurichten, darin, ein dem zu schleifenden Zahnrad 6 identisches, aber mit Diamantkörnern beschichtetes Abrichtzahnrad zu verwenden. Dieses Abrichtzahnrad ist sehr teuer und erlaubt keine nachträgliche Aenderung. Das sehr rationelle Schleifverfahren mit Globoidschnecken konnte deshalb bisher bloss bei der Gross-Serienfertigung angewendet werden. Die vorliegende Erfindung überwindet diese Schwierigkeit, in dem erstmals ein Abrichtwerkzeug für solche globoidartige Schleifschnecken 75 zur Verfügung gestellt wird, das seinerseits programmgesteuert abrichtbar ist und deshalb durch Aenderung des Programms geringfügige Korrekturen auf die Schleifschnecke übertragen kann.

Wie in Fig. 9 dargestellt ist, kreuzen sich die Achsen 5 und 11 von Werkstück- und Schleifspindel windschief. Beim Schleifen liegt die Schleifschnecke 75 über die ganze axiale Breite des Zahnrades 6 an diesem an. Die Achsen 11 und 15 sind vorzugsweise parallel zueinander. Die Abrichtschnecke 76 ist in diesem Fall tonnenförmig. Im übrigen entspricht die Ausführungsform nach Fig. 9 jener nach Fig. 5, so dass die übrigen Elemente der Vorrichtung weggelassen sind.

Abweichend von den dargestellten Ausführungsbeispielen, in welchen die Abrichtvorrichtung in einer Schleifmaschine eingebaut ist, ist es auch möglich, sie getrennt von der Schleifmaschine als separate Vorrichtung einzusetzen.

Abweichend von den beschriebenen Ausführungsbeispielen können die Körner der Konditionierscheibe auch gleich hart oder sogar weicher sein als jene der Abrichtrolle. Die Bindung für die Konditionierscheibe muss aber in diesem Fall im Verhältnis zur Bindung der Abrichtrolle so gewählt werden, dass die Körner der Abrichtrolle mit der Konditionierscheibe herausgebrochen werden können, z.B. in der Art, wie beim Einrollen mit einer "weichen" Stahlrolle eine "harte" Schleifscheibe profiliert wird. Wesentlich ist, dass die Abrichtrolle selbst abrichtbar ist.

## Patentansprüche

1. Verfahren zum Abrichten von Profil-Schleifscheiben (12) mittels einer profilierten Abrichtrolle (19), die zum Abrichten radial relativ zur Schleifscheibe (12) gegen diese bewegt wird und diese beim Abrichten linienförmig berührt, wobei zwischen den Abrichtvorgängen die Abrichtrolle (19) mittels eines Konditionierelementes (25,50) konditioniert wird, das zum Konditionieren relativ zur Abrichtrolle (19) radial bewegt wird, dadurch gekennzeichnet, dass zum Konditionieren das Konditionierelement (25,50) in Punktkontakt mit der Abrichtrolle (19) gebracht und programmgesteuert synchron mit der relativen radialen Zustellung relativ zur Abrichtrolle (19) axial bewegt wird.

2. Vorrichtung zur Durchfühung des Verfahrens nach Anspruch 1, umfassend eine um eine erste Achse (11) mittels eines ersten Antriebs (9) drehbar angetriebene Schleifspindel (10) zum Einspannen einer Profil-Schleifscheibe (12), eine um eine zweite Achse (18) mittels eines zweiten Antriebes (16) drehbar angetriebene, relativ zur Schleifspindel (10) mittels eines ersten Zustellorgans (13) radial verschiebbare Abrichtspindel (17) zum Einspannen einer Abrichtrolle (19), sowie ein relativ zur Abrichtspindel (17) radial durch ein zweites Zustellorgan (23) verschiebbares Konditionierelement (25,50), dadurch gekennzeichnet, dass das Konditionierelement (25,50) durch ein drittes Zustellorgan (20) relativ zur Abrichtspindel (17) axial verschiebbar ist, und dass die Vorrichtung eine Steuereinrichtung (36) enthält, welche die Bewegung des zweiten und dritten Zustellorgans (23,20) programmgesteuert synchronisiert.

3. Vorrichtung nach Anspruch 2, dadurch gekennzeichnet, dass das Konditionierelement eine um eine vierte Achse (49) mittels eines vierten Antriebs (47) drehbar angetriebene Konditionierscheibe (50) ist, die an ihrem Aussenumfang einen mit Hartstoffkörnern beschichteten, rotationssymmetrischen Rand hat, und dass die Konditionierscheibe ausschliesslich mit diesem Rand mit der Abrichtrolle (19, 58) in Berührung kommt.

4. Vorrichtung nach Anspruch 2 oder 3, dadurch gekennzeichnet, dass die Abrichtrolle (19,58) Hartstoffkörner enthält, die härter sind als die Schleifkörner der Schleifscheibe (12) aber dennoch selber abrichtbar ist.

5. Vorrichtung nach einem der Ansprüche 2 bis 4, dadurch gekennzeichnet, dass die Abrichtrolle (19) zum Abrichten der Schleifscheibe (12) einen linienförmigen Kontakt mit dieser hat, und dass das Konditionierelement (25,50) zum Konditionieren der Abrichtrolle (19) einen annähernd punktförmigen Kontakt mit dieser hat.

6. Vorrichtung nach einem der Ansprüche 2 bis 5, dadurch gekennzeichnet, dass die Schleifscheibe (12) eine Schleifschnecke ist, dass die Abrichtrolle (19) rotationssymmetrisch ist, und dass die Abrichtspindel (17) relativ zur Schleifspindel (10) parallel zur ersten Achse (11) mittels eines vierten Zustellorgans (20) programmgesteuert synchron mit der Drehbewegung der Schleifspindel (10) verschiebbar ist.

7. Vorrichtung nach einem der Ansprüche 2 bis 5, dadurch gekennzeichnet, dass die Schleifscheibe eine Schleifschnecke (12,75) ist, dass die Abrichtrolle eine Schneckenrolle (58,76) ist, die mindestens die axiale Breite der Schleifschnecke (12,75) hat, und dass die Steuereinrichtung (33) eine Synchronisiereinrichtung (54) enthält, welche den ersten und zweiten Antrieb (9,16) miteinander sychronisiert, so dass beim Abrichten die Abrichtspindel (17) synchron mit der Schleifspindel (10) dreht.

8. Vorrichtung nach Anspruch 7, dadurch gekennzeichnet, dass mit der Abrichtspindel (17) ein Winkelgeber (70) verbunden ist, dessen Signal eine zweite Synchronisiereinrichtung (36) zur Synchronisierung der Bewegung des Konditionierelements (25,50) steuert.

9. Vorrichtung nach Anspruch 7 oder 8, dadurch gekennzeichnet, dass die Zahnbreite der Schneckenrolle (58,76) geringer ist als die Zahnlückenweite der Schleifschnecke (12,75), und dass eine Einrichtung (34,35) vorhanden ist, um der synchronen Drehbewegung des ersten und zweiten Antriebs (9,16) eine nach Geschwindigkeit und Betrag gesteuerte, relative Zusatzdrehbewegung zu überlagern.

10. Vorrichtung nach einem der Ansprüche 7 bis 9, dadurch gekennzeichnet, dass die Schleifschnecke (75) eine globoidähnliche und die Abrichtrolle (76) eine tonnenförmige Form haben.

## Revendications

1. Procédé pour dresser des meules profilées (12) au moyen d'une roue de dressage (19) profilée qui, pour le dressage, est déplacée radialement par rapport à la meule (12) contre celle-ci et est en contact linéaire avec cette meule pendant le dressage, procédé dans lequel, entre les operations de dressage, la roue de dressage (19) est conditionnée au moyen d'un element de conditionnement (25, 50) qui est déplacé radialement par rapport à la roue de dressage (19) en vue du conditionnement, caractérisé en ce que, pour le conditionnement, l'élément de conditionnement (25, 50) est amené en contact ponctuel avec la roue de dressage (19) et est déplacé axialement, par rapport à la roue de dressage (19), par une commande programmée, en synchronisme avec l'approche radiale relative.

2. Appareil pour la mise en oeuvre du procédé selon la revendication 1, comprenant une broche de meulage (10), entraînée en rotation autour d'un premier axe (11) au moyen d'un premier entraînement (9), servant au montage d'une meule profilée (12), une broche de dressage (17), entraînée en rotation autour d'un deuxième axe (18) au moyen d'un deuxième entraînement (16) et pouvant être déplacée radialement par rapport à la broche de meulage (12) au moyen d'un premier organe d'approche (13), servant au montage d'une roue de dressage (19), ainsi qu'un élément de conditionnement (25, 50) déplaçable radialement par rapport à la broche de dressage (17) par un deuxième organe d'approche (23), caractérisé en ce que l'élément de conditionnement (25, 50) est déplaçable axialement par un troisième organe d'approche (20) par rapport à la broche de dressage (17), et que l'appareil comporte un dispositif de commande (36) qui synchronise le mouvement du deuxième et du troisième organe d'approche (23, 20) sous la commande d'un programme.

3. Appareil selon la revendication 2, caractérisé en ce que l'élément de conditionnement est un disque de conditionnement (50), entraîné en rotation autour d'un quatrième axe (49) au moyen d'un quatrième entraînement (47) et qui présente sur son pourtour extérieur un bord à symétrie de révolution revêtu de grains d'un matériau dur, et que le disque de conditionnement vient exclusivement en contact avec la roue de dressage (19, 58) par ce bord.

4. Appareil selon la revendication 2 ou 3, caractérisé en ce que la roue de dressage (19, 58) contient des grains de matériau dur qui sont plus durs que les grains d'abrasif de la meule (12), mais peut néanmoins être dressée (rectifiée) elle-même.

5. Appareil selon une des revendications 2 à 4, caractérisé en ce que la roue de dressage (19) est en contact linéaire avec la meule (12) pour le dressage de celle-ci, et que l'élément de conditionnement (25, 50) est en contact à peu près ponctuel avec la roue de dressage (19) en vue du conditionnement de cette roue.

6. Appareil selon une des revendications 2 à 5, caractérisé en ce que la meule (12) est une vis sans fin de meulage, que la roue de dressage (19) est à symétrie de revolution et que la broche de dressage (19) est deplacable par rapport à la broche de meulage (10), parallèlement au premier axe (11), au moyen d'un quatrième organe d'approche (20), sous la commande d'un programme et en synchronisme avec le mouvement de rotation de la broche de meulage (10).

7. Appareil selon une des revendications 2 à 5, caractérisé en ce que la meule est une vis sans fin de meulage (12, 75), que la roue de dressage a la forme d'une vis sans fin (58, 75) possédant au moins la largeur axiale de la vis sans fin de meulage (12, 75) et que le dispositif de commande (33) contient un dispositif de synchronisation (54) qui synchronise mutuellement le premier et le deuxième entraînement (9, 16), de manière que, lors du dressage, la broche de dressage (17) tourne en synchronisme avec la broche de meulage (10).

8. Appareil selon la revendication 7, caractérisé en ce que la broche de dressage (17) est reliée à un résolveur (70), dont le signal commande un deuxième dispositif de synchronisation (36) pour synchroniser le mouvement de l'élément de conditionnement (25, 50).

9. Appareil selon la revendication 7 ou 8, caractérisé en ce que la largeur de dent de la vis sans fin de dressage (58, 76) est plus petite que la largeur d'entredent de la vis sans fin de meulage (12, 75) et que l'appareil comporte un dispositif (34, 35) pour superposer un mouvement de rotation supplémentaire relatif, commandé en vitesse et en quantité, au mouvement de rotation synchrone du premier et du deuxième entraînement (9, 16).

10. Appareil selon une des revendications 7 à 9, caractérisé en ce que la vis sans fin de meulage (75) possède une forme semblable à une vis globique et la roue de dressage (76) possède une forme en barillet.

## Claims

1. A method of dressing profile grinding wheels (12) by means of a profiled dressing roller (19) which, for dressing, is moved radially relatively to the grinding wheel (12) against the latter and touches the same linearly during dressing, the dressing roller (19) being conditioned, between the dressing operations, by means of a conditioning element (25, 50) which, for conditioning, is moved radially relatively to the dressing roller (19), characterised in that for conditioning purposes the conditioning element (25, 50) is brought into point contact with the dressing roller (19) and is moved axially, by program control, in synchronism with the relative radial feed relatively to the dressing roller (19).

2. Apparatus for performing the method according to claim 1, comprising a grinding spindle (10) for clamping a profile grinding wheel (12) and driven for rotation about a first axis (11) by means of a first drive (9), a dressing spindle (17) for clamping a dressing roller (19) and driven for rotation about a second axis (18) by means of a second drive (16) and radially movable relatively to the grinding spindle (10) by a first feed element (13), and a conditioning element (25, 50) movable relatively to the dressing spindle (17) radially by a second feed element (23), characterised in that the conditioning element (25, 50) is axially movable relatively to the dressing spindle (17) by a third feed element (20) and in that the apparatus comprises a control device (36) which synchronises the movement of the second and third feed elements (23, 20) under program control.

3. Apparatus according to claim 2, characterised in that the conditioning element is a conditioning disc (50) driven for rotation about a fourth axis (49) by means of a fourth drive (47) and having at its outer periphery a rotation-symmetrical hard-faced edge, and in that the conditioning disc comes into contact with the dressing roller (19, 58) solely by that edge.

4. Apparatus according to claim 2 or 3, characterised in that the hard-facing of the dressing roller (19, 58) contains hard particles which are harder than the grinding particles of the grinding wheel (10) but the dressing roller is nevertheless itself dressable.

5. Apparatus according to any one of claims 2 to 4, characterised in that the dressing roller (19) for dressing the grinding wheel (12) has linear contact with the latter and in that the conditioning element (25, 50) for conditioning the dressing roller (19) has a substantially point contact with the latter.

6. Apparatus according to any one of claims 2 to 5, characterised in that the grinding wheel (12) is a grinding worm, in that the dressing roller (19) is rotation-symmetrical, and in that the dressing spindle (17) is movable relatively to the grinding spindle (10) parallel to the first axis (11) by means of a fourth feed element (20) under program control in synchronism with the rotary movement of the grinding spindle (10).

7. Apparatus according to any one of claims 2 to 5, characterised in that the grinding wheel is a grinding worm (12, 75), in that the dressing roller is a worm roller (58, 76) which has at least the axial width of the grinding worm (12, 75), and in that the control device (33) comprises a synchronising device (54) which synchronises the first and second drives (9, 16) with one another so that during dressing the dressing spindle (17) rotates in synchronism with the grinding spindle (10).

8. Apparatus according to claim 7, characterised in that a selsyn (70) is connected to the dressing spindle (17) and its signal controls another synchronising device (36) for synchronising the movement of the conditioning element (25, 50).

9. Apparatus according to claim 7 or 8, characterised in that the tooth width of the worm roller (58, 76) is less than the tooth gap width of the grinding worm (12, 75) and in that a device (34, 35) is provided in order to superimpose on the synchronous rotary movement of the first and second drives (9, 16) a relative additional rotary movement which is controlled as to speed and magnitude.

10. Apparatus according to any one of claims 7 to 9, characterised in that the grinding worm (75) has a globoidal shape and the dressing roller (76) a barrel shape.
